# EUROPEAN PATENT APPLICATION

(11) **EP 3 521 577 A1**
(43) Date of publication of application: **07.08.2019**
(21) Application number: 19151828.1
(22) Date of filing: 15.01.2019
(51) Int. Cl.: F01M 5/00, F01D 25/18, F02K 3/115, F02C 7/14, F02C 7/25, F16N 39/02, F28D 7/10

(54) **OIL PIPE ASSEMBLY**

(30) Priority: 24.01.2018 GB 201801165
(71) Applicant: Rolls-Royce plc, London SW1E 6AT (GB)
(72) Inventor: Bellis, Mark, Derby, Derbyshire DE24 8BJ (GB)
(74) Representative: Rolls-Royce plc

(57) **Abstract**

The present disclosure concerns an oil pipe assembly for transfer of oil within an engine. Examples disclosed include an oil pipe assembly (200) for an engine, comprising: an outer manifold (203) having a cooling fluid inlet (206) and a cooling fluid outlet (210); an inner manifold (204); an oil pipe (201) extending between the outer and inner manifolds (203, 204); a first outer pipe (207) surrounding the oil pipe (201) and defining a first cooling fluid passage (205); a second outer pipe (209) surrounding the oil pipe (201) and defining a second cooling fluid passage (208), wherein a cooling fluid path through the oil pipe assembly (200) is defined by a series arrangement of the cooling fluid inlet (206), the first cooling fluid passage (205), the second cooling fluid passage (208) and the cooling fluid outlet (210).

## Description

The present disclosure concerns an oil pipe assembly for transfer of oil within a gas turbine engine.

Gas turbine engine oil systems are in general full flow re-circulatory systems that must provide for adequate lubrication and cooling of all engine bearings, gears and drive splines under all foreseeable operating conditions. A complete oil system will tend to be divided into three primary areas: a) feed oil and cooling; b) return oil; c) vent, deaeration and breather system. In each area, oil (or an oil-air mixture) is transferred across air flow paths within the engine. To minimise the risk of ignition, any oil-air mixture needs to be kept below the autoignition temperature. This is a particular issue for oil that is transferred across hot air zones, such as the exhaust path from the combustion zone of the engine, which requires any oil being transferred across such zones to be well insulated from the high surrounding air temperatures.

According to a first aspect there is provided an oil pipe assembly for an engine, comprising:
an outer manifold having a cooling fluid inlet and a cooling fluid outlet;
an inner manifold;
an oil pipe extending between the outer and inner manifolds;
a first outer pipe extending parallel and adjacent to the oil pipe and defining a first cooling fluid passage; and
a second outer pipe extending parallel and adjacent to the oil pipe and defining a second cooling fluid passage,
wherein a cooling fluid path through the oil pipe assembly is defined by a series arrangement of the cooling fluid inlet, the first cooling fluid passage, the second cooling fluid passage and the cooling fluid outlet.

The oil pipe assembly addresses the problem of an engine hazard arising from an oil fire within the engine, which may for example be a gas turbine engine, in which the oil pipe may supply oil to bearings within the engine. The outer skin of the oil pipe can be actively flushed with air passing through the oil pipe assembly, which can prevent oil coking and fire. The oil pipe assembly may be used with either oil feed or scavenge arrangements. The cooling fluid may be supplied from an earlier compressor stage at a temperature below the oil autoignition temperature and a pressure below the operating point oil pressure. As well as providing cooling for the oil flowing through the oil pipe, the cooling fluid can catch any leaking oil, thereby preventing oil accumulation, coking and fire hazards inside the engine.

The oil pipe, first outer pipe and second outer pipe may be coaxial. In alternative embodiments, the first and second outer pipes may have axes that are offset from that of the oil pipe, such that the first and second cooling fluid passages extend along different circumferential portions of the oil pipe.

The first cooling fluid passage may be defined between an inner surface of the first outer pipe and an outer surface of the oil pipe, and the second cooling fluid passage defined between an inner surface of the second outer pipe and an outer surface of the first outer pipe.

In alternative embodiments, the first cooling fluid passage may be defined between an inner surface of the first outer pipe and an outer surface of the second outer pipe, and the second cooling fluid passage is defined between an inner surface of the second outer pipe and an outer surface of the oil pipe.

A fire catcher, or spark arrestor, may be coupled between the second cooling fluid passage and the outlet, so that any potential fire hazards such as oil particles are removed from the cooling fluid stream.

The oil pipe assembly may comprise a set of vanes arranged to direct fluid flow in a rotational direction about the oil pipe as cooling fluid passes through the first and/or second cooling fluid passages. An advantage of directing fluid flow in a rotational direction is that a consistent flow with a reduced load may be achieved, and any oil products that may have resulted from minor leaks can be effectively extracted.

The first cooling fluid passage may comprise a first set of vanes arranged to direct fluid flow in a first rotational direction as the cooling fluid passes through the first cooling fluid passage, and the second cooling fluid passage comprises a second set of vanes arranged to direct fluid flow in the first rotational direction as the cooling fluid passes through the second cooling passage. Since the axial direction of flow along the first cooling fluid passage may be in the opposing direction to that along the second cooling fluid passage, the first and second sets of vanes will in such cases be oriented in opposite directions so as to maintain the same sense of rotation along both cooling fluid passages.

The first outer pipe may in some cases be mounted for rotation relative to the oil pipe, which, in combination with the helical vanes, allows for a higher degree of control over the flow rate and pressure of the cooling fluid.

A first set of helical vanes may be mounted to the inner or outer surface of the first outer pipe. In some cases, a first set of helical vanes may be mounted to the inner surface of the first outer pipe and a second set of helical vanes mounted to the outer surface of the first outer pipe.

A third set of helical vanes may be mounted to the outer surface of the oil pipe or the inner surface of the second outer pipe. In some cases, a third set of helical vanes may be mounted to the outer surface of the oil pipe and a fourth set of helical vanes mounted to the inner surface of the second outer pipe.

The first and second outer pipes may in some cases be disposed on opposing sides of the oil pipe.

In some arrangements, the oil pipe assembly may comprise a plurality of first outer pipes arranged around an outer surface of the oil pipe, wherein the cooling fluid path extends in parallel through the plurality of first outer pipes. The second outer pipe may surround the plurality of first outer pipes, or alternatively may also comprise a plurality of second outer pipes arranged around the outer surface of the oil pipe, the cooling fluid path extending in parallel through the plurality of second outer pipes.

In accordance with a second aspect there is provided a gas turbine engine comprising the oil pipe assembly according to the first aspect.

The skilled person will appreciate that, except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is schematic sectional view of an example oil pipe assembly for transferring oil across air flow zones within a gas turbine engine;
**Figure 3** is a schematic sectional view of an alternative example oil pipe assembly;
**Figure 4a** is a schematic sectional view of a further alternative example oil pipe assembly;
**Figure 4b** is a schematic sectional view across the pipe assembly of Figure 4a, showing cooling fluid flow in a first direction;
**Figure 4c** is a schematic sectional view across the pipe assembly of Figure 4a, showing cooling fluid flow in a second direction;
**Figure 5** is a schematic sectional view of a further alternative example oil pipe assembly; and
**Figure 6** is a schematic sectional view of an alternative outer pipe arrangement for an example oil pipe assembly.

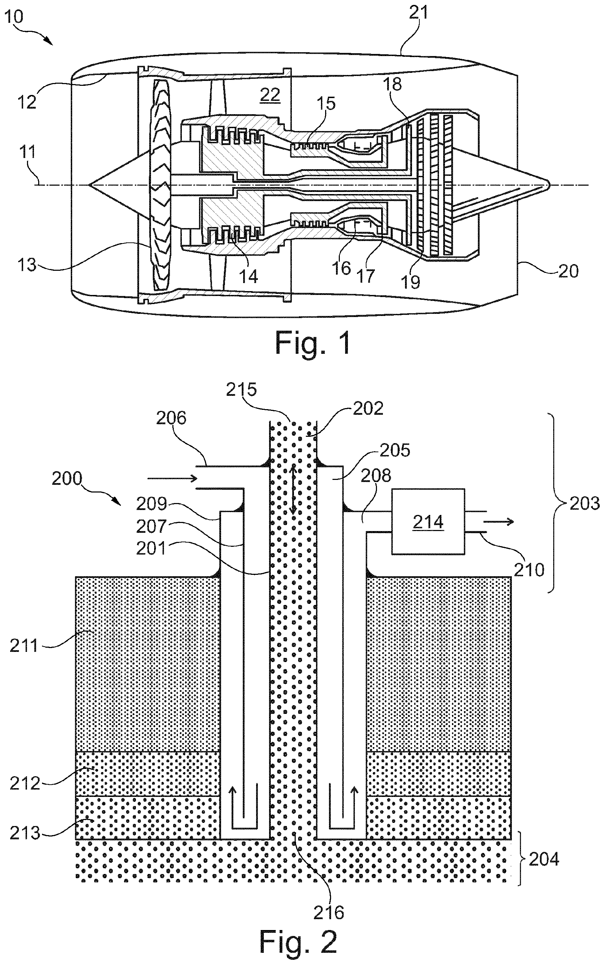

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Shafts interconnecting the different turbines of the gas turbine engine 10 are mounted on bearings within bearing chambers, which are supplied with oil to provide lubrication and cooling. Supplying oil to the bearing chambers requires oil supply and return lines to cross an air flow zone in the engine. For the second air flow in particular, the temperature of the air may be several hundred degrees Celsius. This requires the oil supply and return lines to and from each bearing chamber to be as insulated as possible from the surrounding airflow path.

One possible way of insulating a flow path for a fluid is by using a doubled-skinned pipe, which are known in some applications such as in deep oil well drilling, as for example disclosed in US 8.272,455. In such applications, a pipe is typically surrounded by a second tube containing either a vacuum or an inert fluid (i.e. a gas or liquid). Double-skinned pipes may also be used for lubricant supply in gas turbine engines, such as in EP2042691, which discloses a double-walled arrangement in which an oil pipe is connected directly into a receiving manifold for supplying oil to an internal bearing chamber, the pipe being surrounded by a secondary containment member sealed at the inner manifold end and open at its other end in a relatively safe zone where leaked fluid will be observable. Such an arrangement reduces the risk of an oil leak, as any leaks will tend to be transmitted to a zone where the possibility of ignition is much reduced.

Using a sealed double-skinned tube assembly for an oil supply pipe in a gas turbine engine, in which an outer volume surrounding the supply pipe contains either a pressurised gas or a vacuum, may result in the assembly degrading over time and requiring replacement or recharging. In addition, the effectiveness of the double-skinned assembly, which may alternatively be termed a protective duct or a protective sleeve, will vary depending on the pressure in the outer volume, either between maintenance intervals or over shorter periods, resulting in inconsistencies in the temperature of the oil. These effects can hamper consistent measurement of pressure of the oil relative to ambient pressure, which can be used to detect failure of the oil supply system. A sealed assembly may therefore not be particularly suitable to a gas turbine engine.

Figure 2 illustrates an example of a pipe assembly 200 for a gas turbine engine, comprising an oil pipe 201 carrying a flow of oil 202 and extending between an outer manifold 203 and an inner manifold 204. The flow of oil 202 may be in either direction, i.e. travelling from an outer portion of the engine to an inner portion, typically supplying oil for cooling and lubrication of bearings or other internal moving parts of the engine, or in the reverse direction, extracting oil (usually in an oil-air mixture) from the inner portion of the engine for recirculation. The oil flow pipe 201 may pass through various portions of the gas turbine engine, such as a high pressure air flow zone 211, a high temperature air flow zone 212 (for example an exhaust from the combustion zone of the engine) and a buffer air flow zone 213. The outer manifold 203 may be connected to an oil supply (not shown) and the inner manifold 204 connecting the oil pipe 201 to a bearing chamber (not shown).

The oil pipe 201 is surrounded by a first fluid passage 205 having an inlet 206 at the outer manifold 202, the first fluid passage 205 being defined between an outer surface of the oil flow pipe 201 and an inner surface of a first outer pipe 207. The first outer pipe 207 is surrounded by a second outer pipe 209 defining a second fluid passage 208 between an inner surface of the second outer pipe 209 and an outer surface of the first outer pipe 207. The second fluid passage 208 is connected to the first fluid passage 205 at an opposing end to the inlet 206, for example at or proximate the inner manifold 204, and an outlet 210 connected to the second fluid passage is provided at the outer manifold 203. In operation, a cooling fluid (such as an inert fluid such as air) passes through the inlet 206 and along the first fluid passage 205, exchanging heat with oil 202 passing through the oil flow pipe 201. The cooling fluid then reverses direction at the opposing end of the first fluid passage 205 to the inlet 206 and passes along the second fluid passage 208, exchanging heat with the air flows 211, 212, 213 passing around the outside of the second outer pipe 209 before exiting through the outlet 210.

Also shown in Figure 2 is a fire catcher 214 positioned in line with the second fluid passage 208 between the second fluid passage 208 and the outlet 210. The fire catcher 214 serves to collect any combustible products such as oil in the cooling fluid passing through the second fluid passage 208 to avoid spreading fire to adjacent components in the event of a leak. After passing through the fire catcher 214, the cooling fluid may exit into the engine core or be recycled. The fire catcher, or spark arrestor, 214 may for example be of a type such as disclosed in US4358300, i.e. comprising a cannister having inlet and outlet plenums in line with the second fluid passage and an internal baffle for reducing the velocity of the air stream passing through the fire catcher, thereby promoting settling of particles suspended within the air stream into water (or other non-combustible liquid) contained within a liquid chamber defined by a bottom portion of the cannister.

An advantage of the arrangement shown in Figure 2 is that the risk of oil or other products lacquering and coking within the oil pipe 201 is reduced. Other alternative ways of achieving the same or similar effect are shown in the subsequent drawings, as described in more detail below.

In the arrangement of Figure 2, cooling fluid flows along the first fluid passage, i.e. the inner half of the outer skin, and then back along the second fluid passage, i.e. the outer half of the outer skin. This flow arrangement maximises the cooling benefit of the inert fluid on the central oil pipe 201, prior to its contact with the air flow zones 211, 212, 213, which may be hotter. Along the second fluid passage 208 the inert fluid passes by the various adjacent chambers of the turbine, each containing different fluid pressures and temperatures in accordance with the turbine chamber pressurisation, cooling and flammable fluid ejection strategy.

The temperature of the inert fluid entering the inlet 206 will be below the oil auto-ignition temperature, and its pressure below the oil pressure for the engine operating point of the application. The source of the inert fluid may be compressed air from the compressor of the gas turbine engine, which may be the same engine whose turbine oil supply is being managed. Alternatively, with a multiple-engine plant (such as an industrial power plant), compressed air from another gas turbine could be used as source of the inert fluid.

In order to detect an oil pipe fault, such as a leak, the temperature and pressure changes of the inert fluid, both upstream and downstream of the oil pipe 201, can be measured. Measurements may be done at various points to determine different possible causes of failure, for example at or near the inlet 206 and/or the outlet 210 for the air stream and at or near the inlet 215 and/or outlet 216 of the oil pipe 201. Firstly, a high fluid temperature or pressure upstream of the oil pipe 201 may indicate a leak in the outer skin 209 of the pipe assembly 200 from one of the turbine chambers 211, 212, 213. Secondly, a high temperature or pressure downstream of the oil pipe 201 may indicate an oil leak from the inner skin of the pipe assembly, i.e. the wall of the oil pipe 201. Thirdly, an excessive pressure differential between upstream and downstream paths 205, 208 may indicate a blockage. Fourthly, a higher temperature at the inlet 215 of the oil pipe 201 compared with the outlet 216 may indicate backward flow.

Each of the fault scenarios described above may be used to provide information that can be used to initiate a corresponding, accommodating action (e.g. either maintenance or an engine shutdown), which is intended as a means of avoiding any hazardous consequences of such a failure. This is seen as providing a distinct benefit over the prior art arrangements. For example, a leak from the outer skin of the pipe, detected by high fluid temperature or pressure upstream of the inlet 206 may indicate a leak from one of the turbine chambers into the pipe outer skin 209. This would lead to prohibiting further dispatch of the aircraft because of loss of redundancy to the mixing of hot fluid with the oil, which is a cause of turbine fire that could be potentially hazardous. Similarly, a high temperature or pressure measured downstream of the pipe 201, i.e. at the outlet 210 may indicate an oil leak from the inner skin of the pipe assembly 201 into the fluid path 205, 208, again indicating loss of redundancy to the mixing of hot fluid with the oil and again resulting in a dispatch prohibition. Both such situations would require the engine to be logged for maintenance.

The sensors that may be used to measure the fluid temperature or pressure may be located outside of the engine core zone, which provides for a distinct operational and maintenance benefit. If a need for maintenance is indicated by one or more sensor signals, the inert fluid zones may for example be flushed with water or another suitable fluid to clean out any deposits such as those resulting from oil coking. The inert fluid zones may then have any cleaning fluid residue removed by a high pressure air flow. As such, the system can be cleaned on-engine, i.e. without the need for disassembly or removal from the engine, which provides a significant benefit for operators involving a reduced degree of disruption due to down time of the engine.

The pipe assembly 200, in particular the oil pipe 201 together with the first and second outer pipes 207, 209, may be manufactured by joining together conventional pipework. In some cases, particularly where complicated internal components may be present, the pipe assembly 200 may be at least partially manufactured using additive layer manufacturing (ALM). The pipe assembly 200 may be constructed such that the flushing part of the tube, i.e. the first outer pipe 207 in Figure 2, does not reach the base of the assembly and hence does not need to be welded in a difficult location on the engine. Further, the pipe assembly 200 is designed to be able to expand at the base when heated, which maintains a good flow gap, providing an advantage over existing sealed-tube designs. This is achieved by maintaining a gap between the end of the first outer pipe 207 and a join between the end of the second outer pipe 209 and the oil pipe 201 so that air flow is maintained through the fluid path 205, 208. An advantage over sealed designs is that as a result it is not necessary to match the expansion coefficient so closely because there is a tolerance for differential expansion between the pipes 207, 209 in the air gap. Pipe/tube materials selection and joining methods may be based on industry standards appropriate for the operating fluids and environment (typically extending over a range of -55 to +600 °C). The pipe assembly 200 may incorporate a screw connection or 'top-hat' arrangement rather than a welded construction of the type shown in Figure 2. Types of connections described in US20170254445 may for example be used for joining the pipes.

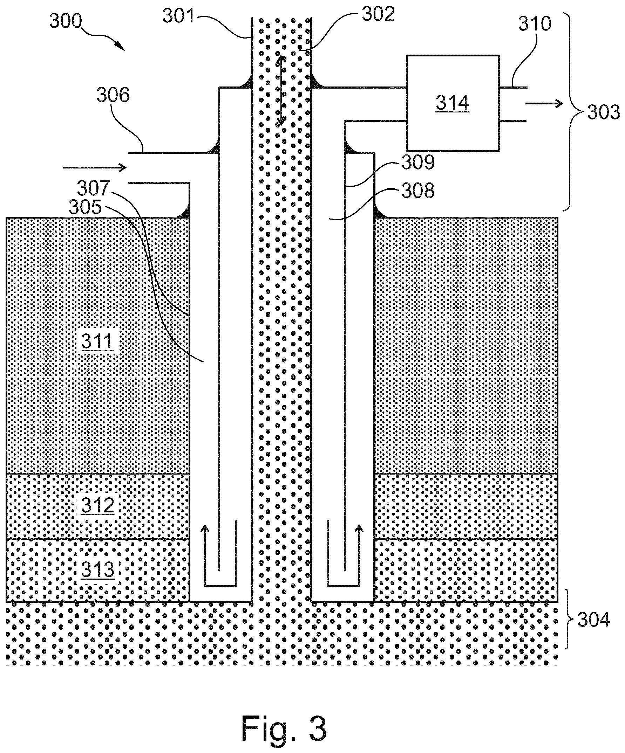

Figure 3 illustrates an alternative example to that of Figure 2, in which the first and second fluid passages are reversed. The first fluid passage 305 is instead defined between an inner surface of the first outer pipe 307 and an outer surface of the second outer pipe 309. The second fluid passage 308 is defined between an inner surface of the second outer pipe 309 and an outer surface of the oil pipe 301. Inert fluid thereby flows initially into the outer half of the outer skin of the pipe assembly 300, adjacent to the turbine chambers 311, 312, 313, and subsequently along the inner half of the outer skin, adjacent to the oil pipe 301. As in the example illustrated in Figure 2, a fire catcher 314 is used to remove any combustible products from the fluid before exiting from the pipe assembly through the outlet 310. Other components shown in Figure 3 correspond to those illustrated in Figure 2, with correspondingly numbered reference signs. Under certain operating conditions there may be benefits to the alternative arrangement shown in Figure 3 in spreading the temperature from one or more of the adjacent chambers so as to even out the temperature between adjacent components. This serves to reduce or minimise the effect of differential expansion of components and hence reduce the risk of chafing.

A gas turbine engine with multiple pipe assemblies for transporting oil to and from the engine core may use a combination of the pipe assemblies of the types shown in Figures 2 and 3 to serve a plurality of instances of oil feed and scavenge pipes.

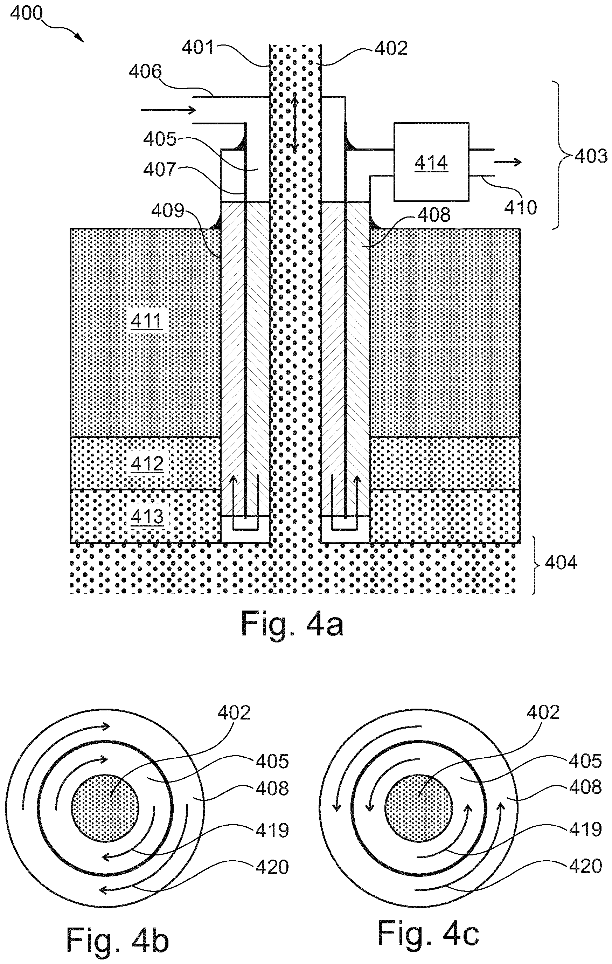

A further alternative example of an oil pipe assembly 400 is disclosed in Figure 4a, the construction of which is similar to that shown in Figure 2. Additional features are present that affect how the inert fluid is transported through the first and second fluid passages 405, 408. These may take the form of first and second sets of helical vanes 417, 418 in the first and second fluid passages 405, 408 respectively. In alternative examples a set of helical vanes may be provided in either the first or the second fluid passage 405, 408. The first set of helical vanes 417 is configured to cause the fluid flow 419 in the first fluid passage 405 to rotate in a first direction as it travels along the passage 405. The fluid flow 420 in the second fluid passage 408 may also be in the first direction. The first direction may for example be clockwise, as shown in the sectional view of the pipe assembly 400 in Figure 4b, or anti-clockwise, as shown in the sectional view of the pipe assembly 400 in Figure 4c. These features assist in minimising stagnation and turbulence in the fluid flow paths, which is beneficial in stirring-up any deposits of combustible products so that they can be carried away by the inert fluid.

Helical vanes may be provided in either or both parts of the outer skin of the pipe assembly 400. With helical vanes in both parts, the helix of the vanes in the outer half, i.e. the second fluid passage 408 in Figure 4a, is oriented in the opposite direction to the helix of the vanes in the inner half, i.e. the first fluid passage 405. This orientation of helical vanes causes the inert fluid to rotate around the central oil pipe 401 in a consistent direction during the inward and outward portions of its flow, which may be clockwise (Figure 4b) or counter-clockwise (Figure 4c) for each instance of a double-skin pipe, dependent on the application. This relative orientation of helical vanes also reduces the effective bend radius of the flow at the bottom of the outer skin of the pipe, which has advantages in maintaining consistent flow with reduced load and in acquiring and extracting any oil products that may have resulted from minor leaks.

If the source of inert fluid is compressed air from the compressor of a gas turbine engine then the reduction in load allows air to be extracted at an earlier stage of the compressor for a given flow, which has an advantage in reducing specific fuel consumption.

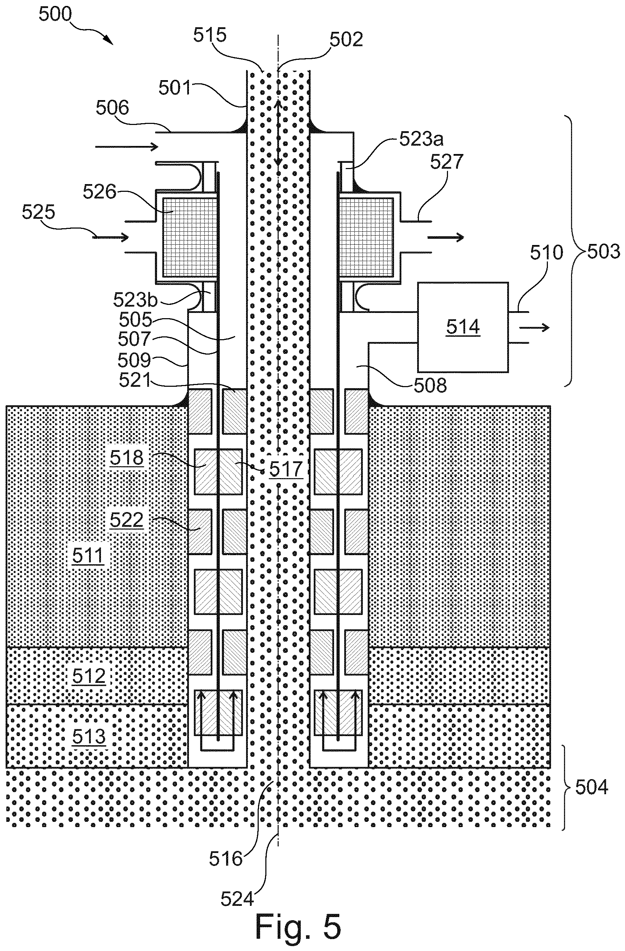

Figure 5 illustrates a further example of an oil pipe assembly 500 having various features in common with the example in Figure 4a, i.e. in which helical vanes are provided in the first and second fluid passages 505, 508. Other features are indicated with corresponding reference signs to those in Figures 2, 3 and 4a. In this example, the first outer pipe 507 is mounted for rotation relative to the oil pipe 501. The first outer pipe 507 may for example be mounted to the second outer pipe 509 with bearings 523a, 523b to allow the first outer pipe 507 to rotate about the longitudinal axis 524 of the oil pipe 501. First and second sets of helical vanes 517, 518 are mounted to the inner and outer surfaces respectively of the first outer pipe 507. As with the example shown in Figure 4a, the helical vanes 517 in the first fluid passage 505 are oriented in the opposite direction to the helical vanes 518 in the second fluid passage 508 so as to cause fluid flow to rotate about the oil pipe 501 in the same direction as the fluid passes along the first fluid passage 505 and the second fluid passage 508. Also shown in the example in Figure 5a are third and fourth sets of helical vanes 521, 522 mounted to the outer surface of the oil pipe 501 and the inner surface of the second outer pipe 509 respectively, the third and fourth sets being static relative to the oil pipe 501, and also oriented in opposing directions. In the illustrated example, all four sets 517, 518, 521, 522 of helical vanes are shown in combination. In alternative examples, one or more of the sets may be present in any combination, depending on the application. Typically, however, at least one set of helical vanes will be mounted to either or both of the inner and outer surface of the first outer pipe 507. Figure 5a also illustrates that the first and second sets alternate along the length of the pipe 501 with the third and fourth sets, with three sets of each of the first and second, and third and fourth, being present in the particular example.

Using various combinations of helical vanes as flow encouragement features, the flow rate and pressure of the inert fluid may be controlled throughout its inward and outward journeys to maximum advantage according to the distribution of temperatures, the collection and extraction of combustible products and the detection of failure modes using relative temperature or pressure measurements. The static and rotating flow encouragement features may be configured to compress the flow in one or more portions and to decompress the flow in one or more other portions.

Depending on the required flow control, the rotation of the first outer pipe 507 may be passive or active. Active rotation could be achieved with flow of compressed air 525 to a small turbine 526 mounted on the first outer pipe 507. The turbine 526 may be controlled through the integration with a vortex amplifier, for example of the type disclosed in US5063733. The "low flow" state of the vortex amplifier would set up a vortex and cause the turbine 526 to rotate where the "high flow" state would direct the flow towards the exit 527 with less rotation of the turbine. Alternatively the oil flow may be used to encourage the rotation of the first outer pipe 507, for example using a device outside the engine core.

Other conventional motor means may be used, preferably outside the engine core, but this may be less practical considering that ambient temperature outside the engine core may still reach the curie temperature of magnetic devices during the normal operating and shut-down cycle of the engine.

The bearings 523a, 523b of the rotating first outer pipe 507 may be conventional bearings or may rely on air flow for one or more bearing locations. It may for example be convenient to arrange at least one oil-lubricated bearing at the outer portion of the engine core with air providing control of the relative position of the divider to the oil pipe at the inner portion of the core. This minimises the complexity and oil heating effect in the hottest zone of the engine core. This may be particularly suitable if oil flow were used as the medium to drive the small turbine 526.

In alternative arrangements, the division between the first and second fluid passages may be circumferential with respect to the oil pipe. The minimum arrangement in such examples would be for one half of the circumferential interstitial space to be devoted to inward flow and the other half to outward flow, with space to flow from one to the other at the base. In such cases, the first and second outer pipes surrounding the oil pipe may be provided on alternate sides of the oil pipe, rather than being coaxial with each other.

Further arrangements may divide the space into more circumferential portions, containing alternate inward and outward flows; some of the divisions between these flow portions may reach the bottom whilst others do not, with the characterisation that each inward flow is matched by adequate outward flow. The sizing of the inward and outward flows may vary with depth. This would enable the local pressure and flow characteristics to be varied for optimised cooling and extraction of oil products.

The rotation of the inward and outward flows around the oil pipe may vary with depth, and an inward helical flow may be used in combination with reversed outward helical flow. This would assist with the consistency of temperature throughout the pipe system, which in turn would reduce stress on the pipe assembly and prolong life.

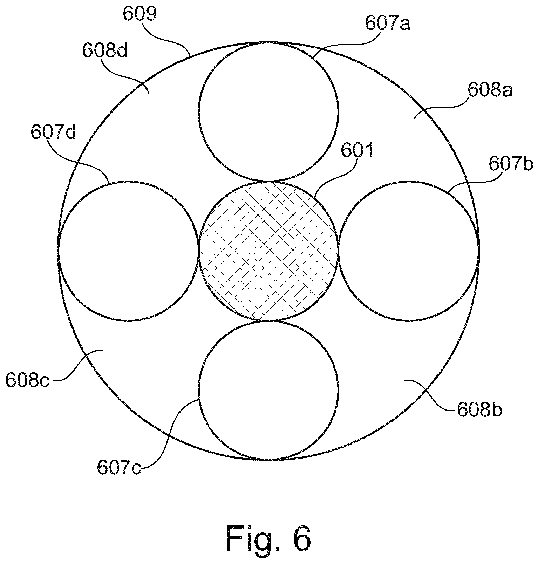

An alternative form of oil pipe assembly is illustrated in Figure 6. In this example, the assembly comprises a plurality of first outer pipes 607a-d, which surround the oil pipe 601 and extend parallel to the oil pipe 601. Surrounding the first outer pipes 607a-d is a second outer pipe 609. The cooling fluid flow path extends in parallel through the first outer pipes 607a-d and through the second outer pipe 609 in the interstitial spaces between the first outer pipes 607a-d. The cooling fluid flow path may have an inlet connected to the first outer pipes 607a-d and an outlet connected to the second outer pipe 609, or in other examples may be reversed. The number of first outer pipes 607a-d may vary from the number illustrated, depending on the design of the oil pipe assembly. For example, altering the number of first outer pipes from that shown in Figure 6 from 4 to 2 tubes, without changing any other dimensions, will result in an effectively narrower inlet flow and a wider outlet flow. The cross-sectional shapes of the pipes may also vary, and are not restricted to circular sections.

In the example illustrated in Figure 6, the second outer pipe 609 surrounds the plurality of first outer pipes 607a-d. In alternative examples, the second outer pipe 609 may be replaced by a plurality of second outer pipes extending parallel and adjacent the oil pipe 601. As can be seen in Figure 6, the interstitial spaces 608a-d between the first outer pipes 607a-d form separate fluid flow paths, which may instead be provided by separate pipes. The first and second outer pipes in such cases may therefore alternate around the circumference of the oil pipe.

The oil pipe assembly disclosed herein is primarily considered for use in a gas turbine engine. The oil flow and interstitial space, i.e. the portion of the air stream passing through the pipes 207. 209 between the turbine chambers 211, 212, 213 and the oil pipe 201, may traverse across a gas path, for example through a compressor inlet guide vane or turbine nozzle guide vane.

The proposed invention could be applied to any fluid or gas path where it is necessary to provide a fluid, such as fuel or oil, to a device across a high temperature zone where it is important to minimise the risk of fluid degradation or auto-ignition.

For example, the proposed oil pipe assembly could be applied to a marine thruster where the oil bearing in a rotating thrust shaft requires the oil flow to traverse a water path through the thruster. The interstitial space would isolate the water temperature and debris content from the oil pipe, providing a measure of consistency to the condition of the oil and a measure of debris impact protection for the oil pipe.

Further, the proposal could be applied to a fuel pipe or group of pipes through a high-temperature zone, where the fluid flow through the interstitial space is a cooling flow that isolates the fuel from the surrounding temperature in the zone. The high temperature zone may be the core zone of a gas turbine engine and the fuel pipe or group of pipes may include fuel manifolds.

Also, the proposed scheme could be applied to the burner assembly of a gas turbine engine, where the fluid flow through the interstitial space provides cooling to the fuel pipes and galleries in the burner assembly, reducing or preventing the effects of fuel degradation, lacquering and coking.

The pipe, manifold or burner applications of the proposed invention may form part of a lean burn fuel staging system.

In any of the aforementioned applications, the fluid flow may rotate as it moves into or out of the interstitial space. This may be beneficial in promoting smooth and consistent flow. There may be further benefit in collecting and expelling droplets of leaked fluid from the inner fluid pipe or adjacent assemblies. In the event of a burst of the inner fluid pipe, the established flow may expel the leaked fluid efficiently; in the case of flammable fluid, this may take it away from a potential fire zone, thereby improving the safety of the plant.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. An oil pipe assembly (200) for an engine, comprising:
an outer manifold (203) having a cooling fluid inlet (206) and a cooling fluid outlet (210);
an inner manifold (204);
an oil pipe (201) extending between the outer and inner manifolds (203, 204);
a first outer pipe (207) extending parallel and adjacent to the oil pipe (201) and defining a first cooling fluid passage (205);
a second outer pipe (209) extending parallel and adjacent to the oil pipe (201) and defining a second cooling fluid passage (208),
wherein the oil pipe (201), first outer pipe (207) and second outer pipe (209) are coaxial and a cooling fluid path through the oil pipe assembly (200) is defined by a series arrangement of the cooling fluid inlet (206), the first cooling fluid passage (205), the second cooling fluid passage (208) and the cooling fluid outlet (210).

2. The oil pipe assembly (200) of claim 1 wherein:
the first cooling fluid passage (205) is defined between an inner surface of the first outer pipe (207) and an outer surface of the oil pipe (201); and
the second cooling fluid passage (208) is defined between an inner surface of the second outer pipe (209) and an outer surface of the first outer pipe (207).

3. The oil pipe assembly (300) of claim 1 wherein:
the first cooling fluid passage (305) is defined between an inner surface of the first outer pipe (307) and an outer surface of the second outer pipe (309); and
the second cooling fluid passage (208) is defined between an inner surface of the second outer pipe (209) and an outer surface of the oil pipe (301).

4. The oil pipe assembly (200) of any preceding claim comprising a fire catcher (214) coupled between the second cooling fluid passage (208) and the outlet (210).

5. The oil pipe assembly (400) of any of claims 1 to 4 comprising a set of vanes (415a, 415b) arranged to direct fluid flow in a rotational direction about the oil pipe (401) as cooling fluid passes through the first and/or second cooling fluid passages (205, 208).

6. The oil pipe assembly (400) of claim 5 wherein the first cooling fluid passage comprises a first set of vanes (417) arranged to direct fluid flow in a first rotational direction as the cooling fluid passes through the first cooling fluid passage (405), and the second cooling fluid passage (408) comprises a second set of vanes (418) arranged to direct fluid flow in the first rotational direction as the cooling fluid passes through the second cooling passage (408).

7. The oil pipe assembly (500) of claim 5 wherein the first outer pipe (507) is mounted for rotation relative to the oil pipe (501).

8. The oil pipe assembly (500) of claim 7 comprising a first set of helical vanes (517) mounted to the inner or outer surface of the first outer pipe (507).

9. The oil pipe assembly (500) of claim 7 comprising a first set of helical vanes (517) mounted to the inner surface of the first outer pipe (507) and a second set of helical vanes (518) mounted to the outer surface of the first outer pipe (507).

10. The oil pipe assembly of claim 8 or claim 9 comprising a third set of helical vanes (521) mounted to the outer surface of the oil pipe (501) or the inner surface of the second outer pipe (509).

11. The oil pipe assembly of claim 8 or claim 9 comprising a third set of helical vanes (521) mounted to the outer surface of the oil pipe (501) and a fourth set of helical vanes (522) mounted to the inner surface of the second outer pipe (509).

12. The oil pipe assembly of claim 1 comprising a plurality of first outer pipes (607a-d) arranged around an outer surface of the oil pipe (601), wherein the cooling fluid path extends in parallel through the plurality of first outer pipes (607a-d).

13. The oil pipe assembly of claim 12 wherein the second outer pipe (609) surrounds the plurality of first outer pipes (607a-d).

14. A gas turbine engine comprising the oil pipe assembly of any preceding claim.
